# EUROPEAN PATENT SPECIFICATION

(11) **EP 1 602 881 B1**
(45) Date of publication and mention of the grant of the patent: **28.02.2007**
(21) Application number: 05019617.9
(22) Date of filing: 29.09.1998
(51) Int. Cl.: F23G 7/00

(54) **Inflator processing apparatus and method of judging charge of inflator**
Verarbeitungsgeräts für Aufblasvorrichtungen und Verfahren zur Beurteilung der Aufblasvorrichtungsladung
Appareil de traitement de gonfleur et procédé d'évaluation de la charge du gonfleur

(30) Priority: 29.09.1997 JP 26457497
(43) Date of publication of application: 07.12.2005
(62) Divisional of application: 98944292.6
(73) Proprietor: DAICEL CHEMICAL INDUSTRIES, LTD., Sakai-shi Osaka (JP)
(72) Inventor: Fukabori, Mitsuhiko, Hyogo (JP); Nakabayashi, Nobuo, Minamikawachi-gun, Osaka (JP); Sakai, Kanshi, Toyota-shi, Aichi (JP); Suzuki, Yasumitsu, Toyota-shi, Aichi (JP); Yoshitake, Norio, c/o Nippon Steel Corporation, Kitakyushu, Fukuoka (JP); Fujioka, Masato, c/o Kyuchiku Kogyo KK, Kitakyushu-shi, Fukuoka (JP)
(74) Representative: W.P. Thompson & Co.

(56) References cited:
- EP-A- 0 677 336
- WO-A-96/14173
- WO-A-97/21058
- US-A1- 2004 164 467
- PATENT ABSTRACTS OF JAPAN vol. 008, no. 026 (M-273), 3 February 1984 (1984-02-03) & JP 58 184420 A (HITACHI ZOSEN KK), 27 October 1983 (1983-10-27)

## Description

### Technical Field:

The present invention relates to an inflator processing apparatus adapted to process a gas generating chemical-containing inflator for an air bag of an automobile by heating the inflator to a temperature not lower than an operating temperature of the chemical and recover a metal case therefor, and to a method of judging the timing of charge of the inflator.

### Brief Description of the Drawings:

Fig. 1 is a longitudinal section illustrating one example of an inflator processing apparatus in accordance with this invention.
Fig. 2 is a flow chart illustrating a method of judging the timing of charge of inflators.
Fig. 3 is a longitudinal section illustrating an example of inflator processing by a conventional waste incinerator.

In the figures;
1: inflators;
2: processing furnace;
3: incinerator;
4, 4a and 4b: furnace wall;
5: sealing valve;
6: charge pusher;
7: charger;
8a, 8b and 8c: partition wall;
9: processing gas supply port;
10: residue discharge port;
11: exhaust tube;
12: burner;
13: air supplier for dilution;
14: waste incinerator;
15: inflator charge port;
16: pressure sensor;
17: peak counter;
20: hopper.

### Background of the Invention:

Installation of air bags has been already made compulsory by laws in U.S. and other countries as safety systems for mitigating impacts on human bodies in case of collisions of automobiles. In Japan, too, there is a high possibility that the installation is made compulsory by laws in the near future.

An inflator is an inflating device for such an air bag. A chemical contained in the inflator is operated by impact occurring at the time of a collision (for example, 2NaN₃ + CuO → Na₂O + Cu + 3N₂), thereby generating an N₂ gas by which the air bag is instantly inflated to protect a passenger(s).

Also, in Japan, new cars equipped with air bags have been recently increasing in number. Since, when those cars equipped with air bags are disposed, a large number of chemical-containing inflators will be generated, it is necessary to operate and process the chemical safely and recover a metal case of the inflator from the standpoints of safety and effective utilization of resources.

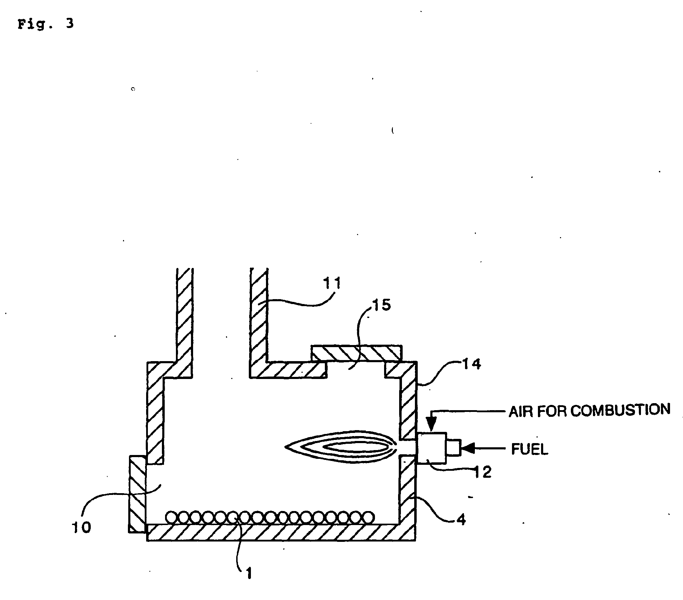

However, since, in recent years, those air bags have started to be installed in automobiles, established processing techniques are not available, and it is the present state that experiments are being conducted to search for a processing method, for example, using a conventional waste incinerator 14, as shown in Fig. 3. This waste incinerator 14 includes a furnace shell formed by a furnace wall 4, an inflator charge port 15 for charging inflators 1 into the incinerator 14, a burner 12 for heating and processing the charged inflators 1, a residue discharge port 10 for discharging the processed inflators 1, and an exhaust tube 11 for evacuating the interior of the incinerator.

Generally, an inflator for an air bag contains a gas generating chemical in a metal case made of stainless steel or aluminum. While the size of the inflator is slightly different between one for a driver's and one for a passenger's side, the rough size of metal cases is approximately from φ50 × H200 mm to φ100 × H50 mm. The operating temperature of the chemical is normally approximately from 300 to 600°C, though it varies depending upon the presence or absence of an igniter.

However, in case where the chemical-containing inflator is processed in the conventional waste incinerator, there are the following problems:
(1) Operation of the chemical splashes the inflator or its fragments, thereby damaging a furnace wall refractory of the waste incinerator or the burner.
(2) Since the burner is directly provided on the waste incinerator, the temperature distribution inside the furnace is made non-uniform by influence of a high-temperature flame, whereby the heating time of the inflator, i.e., the operating time of the chemical, becomes irregular; during a charge work of the inflator, an operation of the chemical occurs; and, in addition, the metal case of the inflator is melted.

WO97/21058 discloses a reactive waste deactivation facility capable of continuously processing a wide spectrum of hazardous waste which includes a building having an outer perimeter defined by a plurality of deactivation bays each including means for deactivating hazardous wastes. The deactivation bays may include bays for the deactivation of ammunition by heating and bays suitable for the deactivation of airbag safety devices by electrical initiation.

### Disclosure of the Invention

This invention has been made to solve the foregoing problems, and its object is to provide an inflator processing apparatus adapted to prevent damage to a furnace wall refractory and the melting of a metal case for the inflator during an operation of a chemical in the thermal processing of the inflator containing the gas generating chemical as well as to provide a method of judging the timing of charge of the inflator.

The present invention provides an inflator processing apparatus adapted to process a gas generating chemical-containing inflator for an air bag of an automobile by heating the inflator to a temperature not lower than an operating temperature of the chemical and recover a metal case therefor,
wherein a metal partition wall is provided between an inner surface of a wall of a processing furnace for processing the inflator and the inflator so as to cover the inner surface of the furnace wall;
and further wherein there is connected to the processing furnace an incinerator provided with a burner and an air upplier for dilution or/and an exhaust gas circulator adapted to produce a processing gas having a temperature slightly higher than the operating temperature of the chemical.

In the inflator processing apparatus and the method of judging charge of inflators in accordance with this invention, since the metal partition wall is provided between the inner surface of the wall of the processing furnace and the inflator so as to cover the inner surface of the furnace wall, the inflator or its fragments splashed by the operation of the chemical collide against the metal partition wall and drop on a floor of the furnace, so that the furnace wall refractory is not damaged.

Further, since a high-temperature flame is generated in the incinerator connected with the processing furnace of the inflator and mixed with an ordinary-temperature air for dilution or/and a low-temperature exhaust gas to obtain a processing gas temperature slightly higher than the operating temperature of the chemical, and uniform and soft heating of the inflator is carried out by this processing gas, not only the heating time necessary for the processing of the operation of the inflator becomes constant, but also the melting of the metal case of the inflator and high-temperature oxidation of the metal partition wall of the processing furnace due to the processing gas are prevented.

Additionally, since the timing of charge of the inflator is judged by comparing the number of charged inflators with the number of peaks of furnace pressure during the operation of the chemical, during charge of the inflator, ejection of the gas generated in the furnace due to the operation of the inflator is prevented.

### Form to Carry Out the Invention

An embodiment of the present invention is hereinafter described with reference to the drawings.

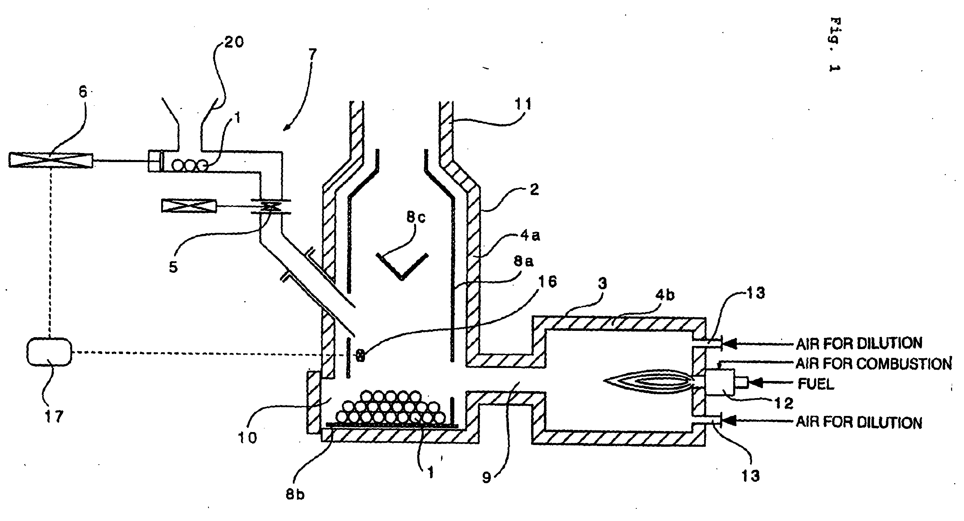

Fig. 1 is a longitudinal section of an inflator processing apparatus illustrating one embodiment of the invention and a conceptual diagram illustrating a method of judging the timing of charge of the inflator.

As shown in Fig. 1, the inflator processing apparatus is constituted by a processing furnace 2 for processing inflators 1 and an incinerator 3 connected together, and shells of the processing furnace 2 and of the incinerator 3 are formed by furnace walls 4a and 4b, respectively.

Since the furnace walls 4a and 4b are required to have refractoriness, heat insulation, and hermeticity, the outer shells of the furnace walls 4a and 4b are normally made of steel skin, and inner surfaces of the steel skin are lined with a refractory material such as castable ceramic fibers.

A charger 7 constituted by a sealing valve 5 and a charge pusher 6 is provided in a side portion of the wall 4a of the processing furnace 2, and the inflators 1 are charged intermittently into the processing furnace 2 by the charger 7.

From the standpoint of preventing the ejection of the gas generated in the furnace, it is desired to operate the sealing valve 5 and the charge pusher 6 for a short period of time, and a driving apparatus to be used is generally in a pneumatic driving mode.

Metal partition walls 8a, 8b, and 8c are provided between the inner surface of the inflator 1 charged in the processing furnace 2 and the furnace wall 4a of the processing furnace 2. Since the metal partition walls 8a, 8b, and 8c are required to have heat resistance and heat strength, a heat-resisting steel such as SUS310S is usually used.

Further, a processing gas supply port 9 for heating the inflators and a residue discharge port 10 for the inflators 1 are provided in a lower portion of the processing furnace 2 as well as an exhaust tube 11 for the processing gas after heating the inflators is provided in an upper portion thereof.

On the other hand, a burner 12 is aligned in one terminal side of the incinerator 3, and fuel and air for combustion are supplied as well as air for dilution into the incinerator 3 from dilution air supplier 13 provided in an outer portion of the burner 12.

The incinerator 3 and a furnace bottom portion of the processing furnace 2 constructed in this way are connected through the processing gas supply port 9, and a processing gas for heating the inflators 1 is supplied into the processing furnace 2 from the incinerator 3.

Next, the operation and function of the inflator processing apparatus in accordance with this invention will be described, together with a method of judging the timing of charge of the inflators.

Fuel and air for combustion are supplied into the burner 12 of the incinerator 3 to generate a high- temperature flame, and the temperature of this high-temperature flame is adjusted to a processing gas temperature adapted for the processing temperature of the inflators 1 and slightly higher than the operating temperature of the chemical by the air for dilution from the dilution air supplier 13, and then blown into the furnace bottom portion of the processing furnace 2 from the processing gas supply port 9.

On the other hand, after opening the sealing valve 5 of the charger 7, the charge pusher 6 is operated to charge the inflators 1 into the processing furnace 2, and immediately thereafter, the sealing valve 5 is closed.

Since the inflators 1 charged in the processing furnace 2 are heated uniformly and softly by a low-temperature processing gas supplied through the processing gas supply port 9, the heating time of the inflators 1 is substantially uniform, and, as a result, the operating time of the chemical is rendered substantially uniform. Also, since the temperature of the processing gas is low, the melting of the metal case of the inflator 1 and high-temperature oxidation of the metal partition walls 8a, 8b, and 8c of the processing furnace 2 are prevented.

Further, since the metal partition walls 8a, 8b, and 8c are provided so as to cover the inner surface of the furnace wall 4a of the processing furnace 2, the inflators 1 and their fragments splashed by the operation of the chemical collide directly against the partition walls 8a, 8b, and 8c and drop on the furnace floor so that the furnace wall 4a is not damaged. Accordingly, a soft furnace material such as ceramic fibers having good heat responsibility can be used as the furnace wall 4a, and it is easy to start up the furnace.

The processing gas after the inflators 1 have been heated is discharged as a low-temperature exhaust gas out of the furnace through the exhaust tube 11.

On the other hand, the residues from the inflators 1 after the heating processing are periodically taken out of the furnace through the residue discharge port 10.

When a large number of inflators 1 are simultaneously charged into the processing furnace 2, the probability of simultaneous operation of the chemical increases, and as a result, the maximum furnace pressure increases, whereby ejection of the gas generated in the furnace through the sealing portion of the furnace body occurs. Thus, for safety, it is necessary to intermittently charge a few of the inflators 1 into the processing furnace 2.

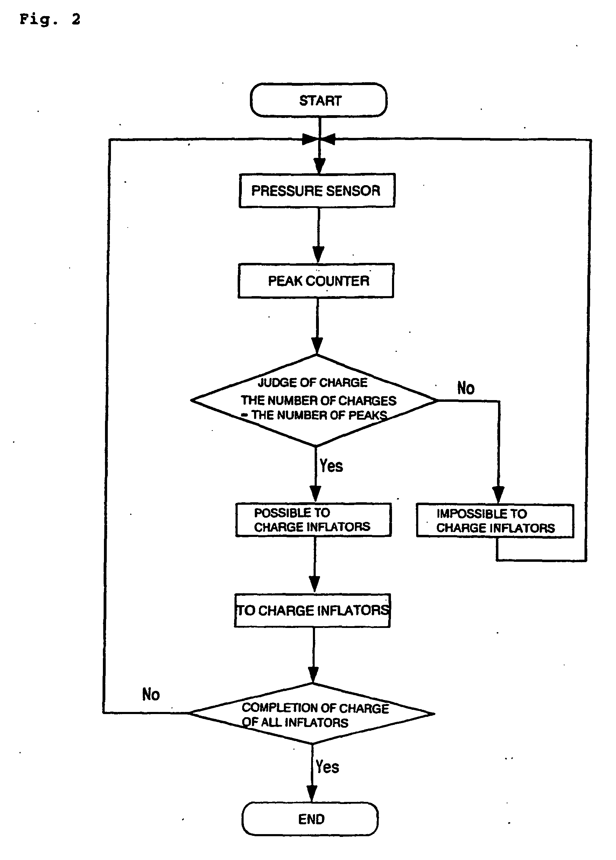

The timing of intermittent charge of the inflators 1 is determined by the method of judging the timing of charge of the inflators as illustrated in Fig. 2. That is, the number of operations of the chemical is counted with a pressure sensor 16 provided on the processing furnace 2 and with a peak counter 17 for a furnace pressure signal, and only in case where the number of counted peaks of the furnace pressure (i.e., the number of pressure peak points) coincides with the number of charged inflators 1, the next inflators 1 are charged.

As a result, since the chemical is not operated during charge of the inflators, the charging work is safe, and, in addition, an interval of charge of the inflators 1 is a minimum time, thereby maximizing the performance of the processing apparatus.

It is to be understood the present this invention is not limited to the embodiment described above and that, as a matter of course, various changes and modifications can be made therein without departing from the gist of this invention, for example, as given below.
(1) The metal partition walls 8a and 8b of the processing furnace 2 are fabricated into a hermetic integral structure, and the furnace wall 4a made of a refractory such as ceramic fibers is formed directly on the outer portion thereof.
(2) For the adjustment of the temperature of the high-temperature combustion gas generated in the incinerator 3, the exhaust gas from the processing furnace 2 or an air preheated by recovering waste heat from the exhaust gas may be used, thereby reducing the fuel consumption rate.
(3) The furnace bottom portion of the processing furnace 2 is fabricated into a refractory grid structure, and the processing gas is supplied from a lower portion of the refractory grid, thereby promoting heat transfer to the inflators 1.
(4) The inflators 1 are heated by an electric heater provided outside the metal partition walls 8a, 8b, and 8c.
(5) A sealing valve similar to the sealing valve 5 of the charger 7 for the inflators 1 is further provided, for example, inside the hopper 20 to form the double sealing valves, and the pusher 6 is provided between the double sealing valves, thereby preventing ejection of the gas in the furnace during charge of the inflators 1.
(6) The furnace bottom portion of the processing furnace 2 can be replaced with an elevatable furnace floor. The processing residues on the furnace floor, which is lowered down, are automatically discharged by the pusher. By pushing up the furnace floor against the main body of the processing furnace 2 by means of a hydraulic unit, the sealing between them is secured.
(7) As measures to treat the exhaust gas and reduce noise during an operation of the chemical, an exhaust gas processor such as a gas neutralizer or a dust arrester and a silencer (if necessary, an exhauster may be provided together) are provided in the downstream side of the exhaust tube 11.

### Advantages of the Invention:

As described above, the inflator processing apparatus and the method of judging the timing of charge of inflators in accordance with the present invention give rise to the following advantages:
(1) Since the metal partition walls are provided between the inner surface of the furnace wall of the processing furnace and each inflator so as to cover the inner surface of the furnace wall, during an operation of the chemical, damage to the furnace wall refractories due to the inflators or their splashed fragments is prevented.
(2) Since the temperature of the high-temperature flame of the burner as a heating source of the inflators is adjusted by the ordinary-temperature air for dilution or/and the low-temperature exhaust gas, and the lower-temperature processing gas after the temperature adjustment is used for heating inflators softly and uniformly, the heating time up to an operation of the chemical is made uniform as well as the melting of the metal case of the inflator and the high-temperature oxidation of the metal partition walls of the processing furnace due to the processing gas are prevented.
(3) Since the timing of the intermittent charge of the inflators is determined by comparing the number of charged inflators with the number of peaks of the furnace pressure during an operation of the chemical, ejection of the processing gas out of the furnace due to the operation of the chemical is prevented during charge of the inflators. Therefore, not only the charging work is safe, but also the inflators can be subjected to heating and processing in a minimum time, thereby maximizing the performance of the processing apparatus.

## Claims

1. An inflator processing apparatus adapted to process a gas generating chemical- containing inflator (1) for an air bag of an automobile by heating the inflator (1) to a temperature not lower than an operating temperature of the chemical and recover a metal case therefor,
wherein a metal partition wall (8a, 8b, 8c) is provided between an inner surface of a wall (4a) of a processing furnace (2) for processing the inflator and the inflator (1) so as to cover the inner surface of the furnace wall (4a);
and **characterized in that** there is connected to the processing furnace (2) an incinerator (3) provided with a burner (12) and an air supplier for dilution (13) or/and an exhaust gas circulator adapted to produce a processing gas having a temperature slightly higher than the operating temperature of the chemical.

2. The inflator processing apparatus as claimed in claim 1, further comprising a pressure sensor (16) provided on the processing furnace (2) and a peak counter (17) for a furnace pressure signal.

## Patentansprüche

1. Verarbeitungsgerät für Aufblasvorrichtungen, das geeignet ist, eine eine Gas erzeugende Chemikalie enthaltende Aufblasvorrichtung (1) für einen Airbag eines Automobils durch Erhitzen der Aufblasvorrichtung (1) auf eine Temperatur, die nicht niedriger ist als eine Betriebstemperatur der Chemikalie, zu verarbeiten und ein Metallgehäuse zurückzugewinnen,
wobei eine Metallzwischenwand (8a, 8b, 8c) zwischen einer inneren Oberfläche einer Wand (4a) eines Verarbeitungsofens (2) zum Verarbeiten der Aufblasvorrichtung und der Aufblasvorrichtung (1) vorgesehen ist, um die innere Oberfläche der Ofenwand (4a) abzudecken;
und **dadurch gekennzeichnet, dass** mit dem Verarbeitungsofen (2) ein Verbrennungsofen (3) verbunden ist, der mit einem Brenner (12) und einer Luftzuführvorrichtung zur Verdünnung (13) oder/und einem Abgasverströmer, der geeignet ist, ein Verarbeitungsgas zu produzieren, das eine geringfügig höhere Temperatur hat als die Betriebstemperatur der Chemikalie, versehen ist.

2. Verarbeitungsgerät für Aufblasvorrichtungen gemäß Anspruch 1, darüber hinaus umfassend einen Drucksensor (16), der am Verarbeitungsofen (2) vorgesehen ist und einen Spitzenzähler (17) für ein Ofendrucksignal.

## Revendications

1. Dispositif de traitement de gonfleur conçu pour traiter un gonfleur contenant un produit chimique générant un gaz (1) destiné à un coussin gonflable de sécurité d'une automobile en chauffant le gonfleur (1) à une température qui n'est pas inférieure à une température d'exploitation du produit chimique et récupérer un carter métallique pour celui-ci,
dans lequel une paroi de séparation métallique (8a, 8b, 8c) est prévue entre une surface intérieure d'une paroi (80) d'un four de traitement (2) destiné à traiter le gonfleur et le gonfleur (1) de façon à recouvrir la surface intérieure de la paroi de four (4a),
et **caractérisé en ce que** le four de traitement (2) est relié à un incinérateur (3) doté d'un brûleur (12) et d'un dispositif d'alimentation en air pour une dilution (13) ou/et un dispositif de circulation de gaz d'échappement conçu pour produire un gaz de traitement ayant une température légèrement supérieure à la température d'exploitation du produit chimique.

2. Dispositif de traitement de gonfleur selon la revendication 1, comprenant en outre un capteur de pression (16) prévu sur le four de traitement (2) et un compteur de crêtes (17) pour un signal de pression dans le four.
